# EUROPEAN PATENT APPLICATION

(11) **EP 2 237 173 A2**
(43) Date of publication of application: **06.10.2010**
(21) Application number: 10154725.5
(22) Date of filing: 25.02.2010
(51) Int. Cl.: G06F 17/30

(54) **Storing and searching encoded data**

(30) Priority: 31.03.2009 US 415734
(71) Applicant: Comcast Cable Holdings, LLC, Philadelphia PA 19102-2148 (US)
(72) Inventor: Suslov, Sergei, Washington, DC (US)
(74) Representative: Watterson, Peer Marten John

(57) **Abstract**

Systems and methods are disclosed for creating indexes of content and searching those indexes. The indexes include byte arrays. The byte array fields may be chosen to facilitate searching at the byte array level. During a search operation, potential matches may be eliminated based on values in the byte array. Deserialization may be performed on only the records that have not been eliminated.

## Description

### FIELD OF THE INVENTION

Aspects of the invention relate to systems and methods for storing and searching data. More particularly, aspects of the invention relate to systems and methods for storing and searching data that allow for searching at the byte array level.

### BACKGROUND

Indexes are commonly used to facilitate the searching of stored data. The basic organization of a search index includes a key-value pair. The key is the indexed term and the value is a list of items or documents. In a typical object-oriented implementation keys and values are stored in serialized forms of objects. Software applications and tools are available for serializing data. Conventional serialization applications often produce indexes that have a high storage overhead.

After the data is stored, searching indexed data with conventional processes can be time consuming and computationally expensive. When a user or application issues a search request, a system typically traverses the keys in the index and looks for a match. The process of looking for a match includes deserializing keys and associated values into objects in real-time. While deserializing objects, such as Java objects, can be performed with readily available and convenient to use applications, the time required to perform this process becomes significant as the size of an index increases.

The delays associated with conventional systems and methods for searching indexes become more noticeable when other delays are already present in systems. For example, a user may enter a search to locate a television show at a set-top box. The search may be transmitted to a remote server via a telephone line, network connection or satellite signal and the search results are transmitted back via the same or a different path. The combination of transmission and searching delays may make the system inconvenient to users.

Thus, novel systems and methods for improving storage efficiencies and searching speeds would be beneficial to the art.

### SUMMARY OF THE INVENTION

The following presents a simplified summary of the disclosure in order to provide a basic understanding of some aspects. It is not intended to identify key or critical elements of the invention or to delineate the scope of the invention. The following summary merely presents some concepts of the disclosure in a simplified form as a prelude to the more detailed description provided below.

Aspects of the invention relate to systems and methods for creating indexes of content and searching the indexes at the byte array level. In one implementation a method of searching an indexed collection of documents is provided. The method includes receiving a search request that includes at least one key. The at least one key is compared to values in a byte array at a processor. Potential matches are eliminated based on values in the byte array. Another implementation includes a server programmed with computer-executable instructions to search an index at the byte array level.

In other embodiments, the present invention can be partially or wholly implemented on a computer-readable medium, for example, by storing computer-executable instructions or modules, or by utilizing computer-readable data structures.

Of course, the methods and systems of the above-referenced embodiments may also include other additional elements, steps, computer-executable instructions, or computer-readable data structures. In this regard, other embodiments are disclosed and claimed herein as well.

The details of these and other embodiments of the present invention are set forth in the accompanying drawings and the description below. Other features and advantages of the invention will be apparent from the description and drawings, and from the claims.

### BRIEF DESCRIPTION OF THE DRAWINGS

The present disclosure is illustrated by way of example and not limited in the accompanying figures in which like reference numerals indicate similar elements and in which:

Figure 1a shows an exemplary cable system in accordance with one embodiment of the invention;

Figure 1b illustrates an exemplary CPE in accordance with an embodiment of the invention;

Figure 2 illustrates a system that may be used to store and search content, in accordance with an embodiment of the invention;

Figure 3 illustrates an exemplary process that may be used to search content, in accordance with an embodiment of the invention;

Figure 4 illustrates metadata for two pieces of content that will be used to create byte array entries, in accordance with an embodiment of the invention; and

Figure 5 illustrates exemplary index entries, in accordance with an embodiment of the invention.

### DETAILED DESCRIPTION

Aspects of the invention may relate to the transmission of data and/or content between a broadcast provider and electronic devices at an end-user location. As used herein, the term "electronic device" refers to an apparatus that includes a memory and a processor, wherein the memory is configured to include computer-readable instructions, that when executed by the processor, execute an electronic method, such as transmitting or receiving multimedia content and/or communication data. Exemplary electronic devices include, but are not limited to: a set-top box, a telephone, a cable modem, computers (*i.e*., mobile, laptop, desktop), and combinations thereof.

As used herein, the term "set-top box" is used to describe an apparatus that is configured to receive and provide an output of multimedia content from a broadcast provider. The broadcast provider may include a cable system, satellite system, or other system associated with providing broadcast services to a user location. Moreover, a set-top box is not required to be a separate apparatus, but rather would encompass a television or PVR configurable to receive the media content. Indeed, any device that is configurable to receive and provide an output signal comprising media content from a broadcast provider falls within the term set-top box as used herein. The apparatus(es) that form the set-top box may include any number of processors, memories, user interfaces, and other features to facilitate the operation thereof.

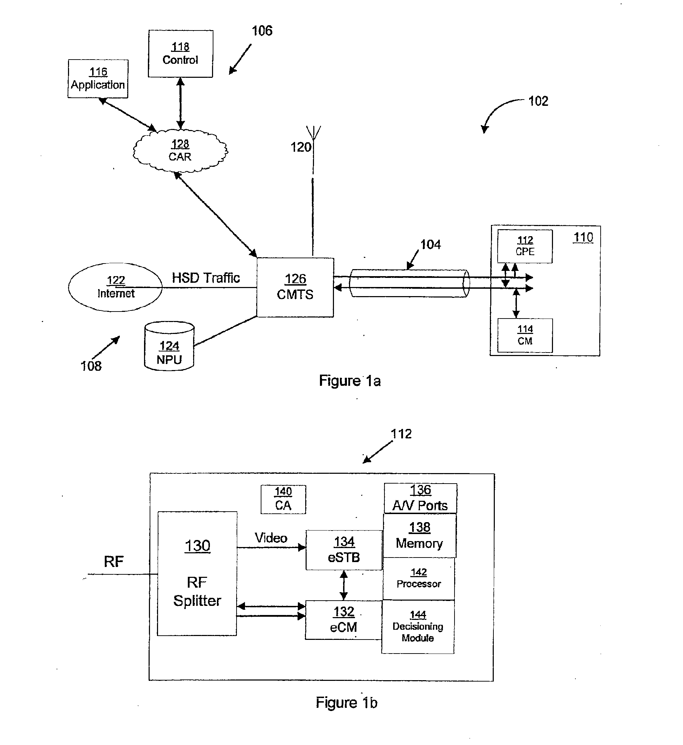

Figure 1a shows an exemplary cable system in accordance with one embodiment of the invention. Those skilled in the art with the benefit of this disclosure will readily appreciate that the teachings of the invention may be utilized on several different broadcast systems, however, exemplary aspects and embodiments thereof will be explained in relation to an exemplary cable system to readily convey certain aspects and embodiments. In this regard, additional or fewer components may be utilized in the exemplary cable system 102 without departing from the scope of the invention. As seen in Figure 1a, exemplary cable system 102 may include communication medium 104 for transmitting data over a network. The medium 104 may include, for example, fiber optic cable, coax, hybrid fiber coax (HFC), multiple wireless connections, satellite transceivers, or any combination of mediums that may transmit or receive content. In this regard, cable systems are often conceptually divided into a management/application portion 106 and a High Speed Data (HSD) portion 108 that respectively provide management/application and HSD services over the medium 104 to an end-user location 110.

The end-user location 110 generally relates to all features, devices, and applications located at a customer's location which are operatively connected and configured to interface with one or both of the broadcast provider and/or end-users at the user location in relation to media services associated with the cable system provider. The end-user location may include any number of electronic devices, including customer premises equipment ("CPE") 112 and a cable modem ("CM") 114. As used herein, customer premise equipment refers to electronic devices that are supplied, authorized or approved by the broadcast provider for receiving services provided by the broadcast provider. For example, a user may rent a set-top box from the cable company that is required to receive at least a portion of the programming provided through the communication medium 104. Not every electronic device, however, must be a CPE to transmit or receive content from the broadcast provider. For example, a user may utilize a non-CPE computer to access the internet 122 through the communications medium 104.

The management/application portion 106 may include an application portion 116, a control portion 118, and a video/television portion 120. The control portion 118 may include systems configured to facilitate controlling, provisioning, managing, and/or securing the CPE 112 through one or more protocols, such as out-of-band messaging and include one or more servers, such as policy servers, TFTP servers, and/or central repositories for storing data, such as billing information.. The application portion 116 may be configured to provide applications to the CPE 112 and/or other electronic devices, such as video on demand, interactive television, and/or other services. The video/television portion 120 may cooperate with the application portion 116 and control portion 118 to support video operations associated therewith and/or it may act independently to provide television, music, video, and other multimedia services to the CPE 112. The CPE 112 or any other electronic device at the end-user location 110 may be configured to operate according to or support the operation of any number of protocols, applications, and procedures, including applications such as linear and non-linear television programming (cable, satellite, broadcast, etc.), Video on Demand (VOD), interactive television (iTV), interactive gaming, pay-per-view (PPV), and protocols such as, Hyper Text Transfer Protocol (HTTP), Dynamic Host Configuration Protocol (DHCP), Syslog, Simple Network Management Protocol (SNMP), Trivial File Transfer Protocol (TFTP), Data Over Cable Service Interface Specification (DOCSIS), Domain Name Server (DNS) applications, DOCSIS Settop Gateway (DSG), out-of-band (OOB) messaging, and others.

The cable modem termination system (CMTS) 126 may comprise a combiner (not shown) that may combine signals from application portion 116 with the signal from the video/television portion 120 before transmission to the end-user location 110. The CMTS 126 may be configured to send and receive signals over the communication medium 104, such as between the Internet 122 and the CPE 112 and the CM 114.

Once received at the end-user location 110, specific data, such as QoS configuration files, may be received at CM 114, while other information, such as audiovisual multimedia delivered in a specific format (i.e., MPEG-2) may be received at other equipment, such as CPE 112.

The HSD network 108 may provide data services for the system 102, including services for the CM 114 to access the Internet 122. It may include a network element, such as a network provisioning unit (NPU) 124. The NPU 124 may be configured to support any number of activities associated with the electronic devices. In accordance with one non-limiting aspect of the present invention, the NPU 124 may include capabilities to facilitate configuring the electronic devices, such as by distributing bulk configurations files to one or more the electronic devices. It may be configured to communicate with the electronic devices through any number of protocols, applications, and communication mediums, including DHCP, HTTP, SNMP, TFTP, and the like.

A CAR 128 may be configured to connect the management network 106 to the CMTS 126. The CAR 128 may transport signals there between using IP protocols, and optionally, it may provide firewall separation for the VOD or STB controller portions and from the HSD network 106, enhancing security from any devices attempting to associate with devices and signaling on the management network. In operation, signaling traffic transported between the management network 106 and the CMTS 126 may be wrapped into addressable packets, such as Ethernet, IP, or other packets. Further discussions relating to exemplary cable systems may be located within U.S. Patent No. 6,463,585, which is hereby incorporated by reference in its entirety for any and all purposes.

Figure 1b illustrates an exemplary CPE, such as CPE 112 shown in Figure 1a, in accordance with an exemplary embodiment of the present invention. The CPE 112 may be configured to communicate with the CMTS 126 through digital cable signals, such as through signaling defined by DOCSIS, DSG, and/or through other protocols, such as any other protocol authorized through DHCP registration. The CPE 112 may include a splitter 130, such as a radio frequency (RF) splitter, an embedded cable modem (eCM) 132, an embedded set-top box (eSTB) 134, audio visual (A/V) ports 136, a memory (volatile and/or non-volatile) 138, an conditional access (CA) unit 140, and a processor 142.

The splitter 130 may be configured to split RF signals into multiple groups, such as a group comprising out-of-band control functions and/or two-way application traffic and another group for multimedia content delivery. The out-of-band and/or two-way application traffic may be relayed to the eCM 132 and the multimedia content may be separately relayed to the eSTB 134. The eSTB 134 may be configured to manipulate signals and output video and other media signals to a media output device (not shown) or other device connected to the A/V ports 136, such as to a television (TV), digital video recorder (DVR), personal video recorder (PVR), or the like.

The eCM 132 may be configured to process and control other signals, such as DOCSIS and other IP packets, and bridge or relay the signals to the eSTB 134 through an internal communications link. The communications link may be used to transfer signals received through data tunnels, such as those tuned to by the eCM 132 to the eSTB 134, so that out-of-band messaging signals associated therewith can be delivered to the eSTB 134 for processing. The eCM 132 may include network communication capabilities for bi-directional communication of data signals with the CMTS 126.

The CA unit 140 may be configured to provide conditional access control for the CPE 112. It may include or be configured to receive a CableCard, SmartCard, or other item for controlling security and access to the data, video, and control signals transmitted over the communication medium 104. It is illustrated as a standalone item, however, it can be included with or embedded on the eSTB 134 or the eCM 132 to perform similar functions.

The eCM 132, eSTB 134, and CA unit 140 may be logically separate entities, however, they may physically share hardware and software. Other items, such as control logic and applications may be included on the CPE 112 for controlling operation of the eSTB 134 and/or the eCM 132.

The CPE 112 may further comprise a decisioning module 144, which as discussed below in more detail, may determine what portion of content, such as an advertisement to present to a user. Decisioning module 144 may be a separate entity (as shown), yet in other embodiments, the decisioning module is any module, including processor 140, that may execute computer-executable instructions, such as those stored on memory 138 to determine which portion of content to present to the user. The foregoing system and apparatuses are merely provided for exemplary purposes and are thus intended to provide guidance on possible devices, applications, and configurations which may be used.

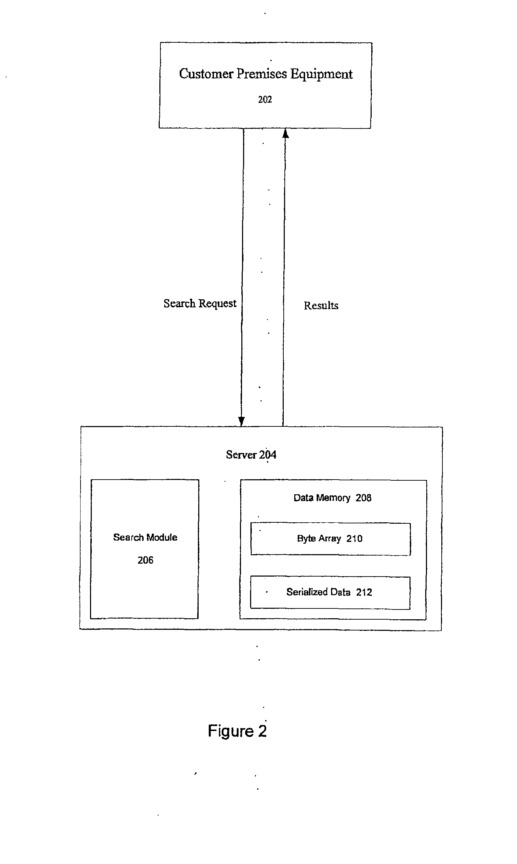

Figure 2 illustrates a system that may be used to store and search content, in accordance with an embodiment of the invention. A user may perform a search with customer premises equipment 202. Customer premises equipment 202 may be implemented with a set-top box, a television, computer device or other equipment used to interact with a source of audiovisual content. Customer premises equipment 202 transmits a search request to a server 204. Server 204 may be implemented with a conventional computer device and may be operated by cable television entity or other source. Server 204 receives the search request and utilizes a search module 206 to search content stored in a data memory 208. Search module 206 may be implemented with hardware, software or a combination of hardware and software. Data memory 208 includes an indexed collection of content. The index includes a byte array 210 and serialized data 212. Exemplary structures of byte array 210 and serialized data 212 are provided below.

In operation, search module 206 may be configured to search at the byte array level. Searching at the byte array level reduces or eliminates the need to deserialize data. After a search is performed, server 204 returns results to customer premises equipment 202.

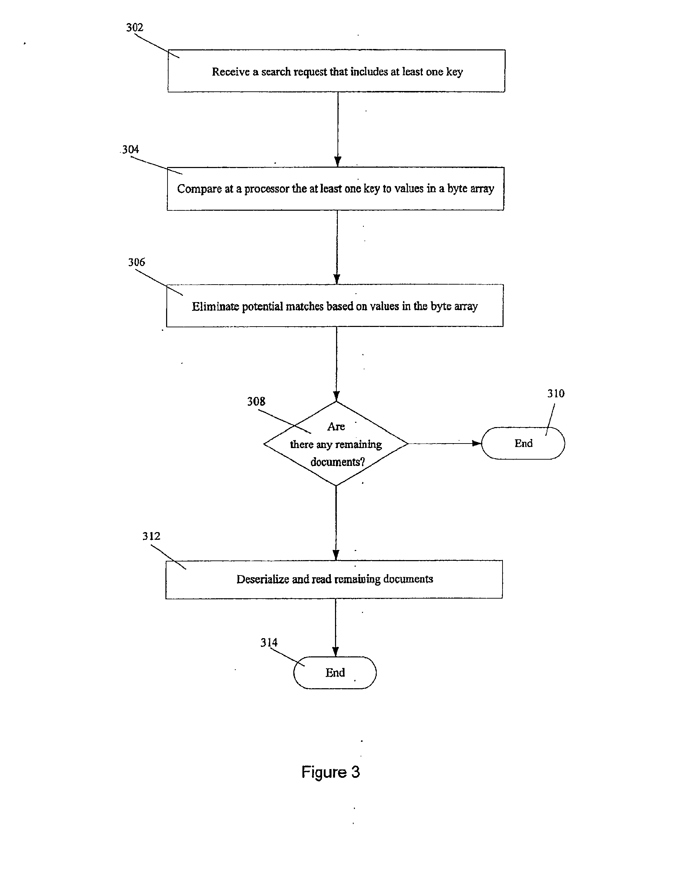

Figure 3 illustrates an exemplary process that may be used to search content, in accordance with an embodiment of the invention. First, in step 302 a search requests that includes at least one key is received. The search request may be received at a server, such as server 204. Next, in step 304 the at least one key is compared to values in a byte array at a processor. Potential matches may then be eliminated based on values in the byte array in step 306. For example, a byte array may indicate whether or not content is formatted in a high definition format and potential matches may be eliminated based on this value. Next, in step 308 it is determined whether or not there any remaining documents that have not been eliminated. If there are not, the process ends in step 310. When there are remaining documents, in step 312 the remaining documents are deserialized and read so that further searching can be performed. The process ends in step 314.

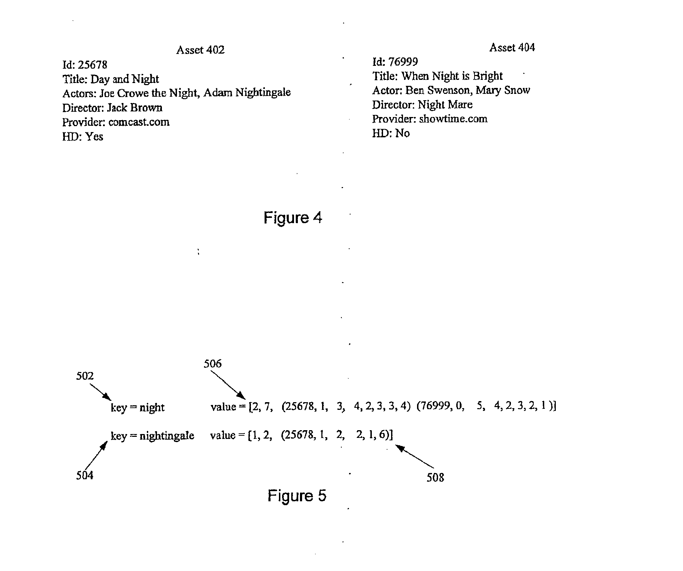

Figure 4 illustrates metadata for two assets or pieces of content 402 and 404 that will be used to create byte array entries in accordance with an embodiment of the invention. The metadata for each asset or piece of content includes fields for an ID, title, actors, director, provider and indication of whether or not the asset or piece of content is in a high definition format. One skilled in the art will appreciate that a variety of additional and/or alternative fields may be utilized. In various embodiments, the fields are chosen such that expected search criteria are likely to be completed by analyzing byte array entries that correspond to the metadata.

Figure 5 illustrates exemplary index entries 502 and 504. Entry 502 corresponds to a key value of "night" and includes a byte array value 506. Entry 504 corresponds to a key value of "nightingale" and includes a byte array value 508. For presentation purposes, byte arrays 506 and 508 use parentheses to logically group byte sections relating to different assets or pieces of content. An exemplary byte array may include header, metadata, positions header and positions of matches sections.

The values represented by bytes in exemplary byte array 506 are described below. First, the number "2" indicates the number of assets coded in the array. The number "7" indicates the fields of the assets coded in the array the key ("night") occurs. The number "7" may represent the fields of title, actors, and directors. The number "25678" corresponds to the asset ID and the value of "1" indicates that the content is high definition content. Next, the number "3" indicates which fields of the asset the key "night" occurs. In the example shown, "3" represents the fields of title and actors. The positions of the matches are represented by "4,
2, 3, 3, 4." The first "4" indicates the number of the next elements of the byte array that describe the positions in which the key is found, the "2,3" represent pointers to the positions and "3,4" indicate the positions themselves.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.
There follows a selection of a number of features relating to one or more embodiments of the invention. Where a numbered feature refers to an earlier numbered feature, then all of the elements of that earlier feature are understood to be included with the referring feature. Applicant gives notice that it reserves the right to claim any of the below features, either singularly or in combination.

### Features

1. A method of searching an indexed collection of documents, the method comprising:
   (a) receiving a search request that includes at least one key;
   (b) comparing at a processor the at least one key to values in a byte array; and
   (c) eliminating potential matches based on values in the byte array.
2. The method of feature 1, wherein (a) comprises receiving a search request that includes at least one key and identifies at least one field that must contain the at least one key.
3. The method of feature 2, wherein (b) comprises comparing at a processor the at least one key to values in a byte array that represent fields that contain the at least one key.
4. The method of feature 3, wherein (c) comprises eliminating potential matches when the byte array does not indicate that a document contains the at least one key in the at least one field.
6. The method of feature 3, wherein (b) comprises comparing at a processor the at least one key to values in a byte array that indicate whether the document indicates that content is high definition content.
7. The method of feature 3, wherein (b) comprises comparing at a processor the at least one key to values in a byte array that indicate the start time of the broadcast of audio visual content.
8. The method of feature 3, wherein (b) comprises comparing at a processor the at least one key to values in a byte array that indicate whether the key is found in a document title field.
9. The method of feature 3, wherein (b) comprises comparing at a processor the at least one key to values in a byte array that indicate whether the key is found in a document genre field.
10. The method of feature 1, further including:
   (d) deserializing and reading documents not eliminated in (c).
11. A server computer comprising:
   a memory module containing an indexed collection of documents, a processor configured to perform the steps comprising:
      (a) receiving a search request that includes at least one key;
      (b) comparing the at least one key to values in a byte array; and
      (c) eliminating potential matches based on values in the byte array.
12. The server computer of feature 11, wherein (a) comprises receiving a search request that includes at least one key and identifies at least one field that must contain the at least one key.
13. The server computer of feature 12, wherein (b) comprises comparing at a processor the at least one key to values in a byte array that represent fields that contain the at least one key.
14. The server computer of feature 13, wherein (c) comprises eliminating potential matches when the byte array does not indicate that a document contains the at least one key in the at least one field.
15. A method of searching an indexed collection of audiovisual content, the method comprising:
   (a) receiving from customer premises equipment a search request that includes at least one search term and a document field;
   (b) analyzing an index byte array to identify documents that contain the search term in the document field; and
   (c) eliminating a document from satisfying the search requests when the index byte array does not indicate that the document contains the search term in the document field.
16. The method of feature 15, further including:
   (d) deserializing and searching documents not eliminated in (c).
17. The method of feature 15, wherein the document field is a high definition field.
18. The method of feature 15, wherein the document field is a start time field.
19. The method of feature 15, wherein the document field is a title field.
20. The method of feature 15, further including:
   (d) deserializing and reading documents not eliminated in (c).

## Claims

1. A method of searching an indexed collection of documents, the method comprising:
(a) receiving a search request that includes at least one key;
(b) comparing at a processor the at least one key to values in a byte array; and
(c) eliminating potential matches based on values in the byte array.

2. The method of claim 1, wherein (a) comprises receiving a search request that includes at least one key and identifies at least one field that must contain the at least one key.

3. The method of claim 2, wherein (b) comprises comparing at a processor the at least one key to values in a byte array that represent fields that contain the at least one key, and in this instance:
(c) may comprise eliminating potential matches when the byte array does not indicate that a document contains the at least one key in the at least one field;
(b) may comprise comparing at a processor the at least one key to values in a byte array that indicate whether the document indicates that content is high definition content;
(b) may additionally or alternatively comprise comparing at a processor the at least one key to values in a byte array that indicate the start time of the broadcast of audio visual content;
(b) may additionally or alternatively comprise comparing at a processor the at least one key to values in a byte array that indicate whether the key is found in a document title field; and
(b) may additionally or alternatively comprise comparing at a processor the at least one key to values in a byte array that indicate whether the key is found in a document genre field.

4. The method of any preceding claim, further including:
(d) deserializing and reading documents not eliminated in (c).

5. A server computer comprising:
a memory module containing an indexed collection of documents, a processor configured to perform the steps comprising:
(a) receiving a search request that includes at least one key;
(b) comparing the at least one key to values in a byte array; and
(c) eliminating potential matches based on values in the byte array.

6. The server computer of claim 5, wherein (a) comprises receiving a search request that includes at least one key and identifies at least one field that must contain the at least one key.

7. The server computer of claim 6, wherein (b) comprises comparing at a processor the at least one key to values in a byte array that represent fields that contain the at least one key.

8. The server computer of claim 7, wherein (c) comprises eliminating potential matches when the byte array does not indicate that a document contains the at least one key in the at least one field.

9. A method of searching an indexed collection of audiovisual content, the method comprising:
(a) receiving from customer premises equipment a search request that includes at least one search term and a document field;
(b) analyzing an index byte array to identify documents that contain the search term in the document field; and
(c) eliminating a document from satisfying the search requests when the index byte array does not indicate that the document contains the search term in the document field.

10. The method of claim 9, further including:
(d) deserializing and searching documents not eliminated in (c).

11. The method of claim 9 or claim 10, wherein the document field is a high definition field.

12. The method of any of claims 9 to 11, wherein the document field is a start time field.

13. The method of any of claims 9 to 12, wherein the document field is a title field.

14. The method of any of claims 9 to 13, further including:
(d) deserializing and reading documents not eliminated in (c).

15. A method of searching a collection of electronic files, the method comprising:
generating one or more keys corresponding to one or more terms used to describe said electronic files,
compiling, for each key a byte array wherein said byte array comprises a plurality of numbers describing characteristics of said key, and wherein said characteristics include: a number of files to which the byte array relates, a number of descriptor fields for said electronic file matching said key, an identification number for each file to which the bite array relates, an indication of whether the corresponding file is stored in high definition, an indication of which descriptor fields relate to the key, an indication of positions of matches with the key;
receiving a search term; and
performing said search by comparing a number corresponding to at least a portion of said search term with said byte array.
